(19) Europäisches Patentamt
European Patent Office
Office européen des brevets

(11) EP 0 733 304 A2

(12) EUROPEAN PATENT APPLICATION

(43) Date of publication:
**25.09.1996 Bulletin 1996/39**

(51) Int Cl.[6]: **A01N 25/26**, A01N 43/00, A01N 33/12, C02F 1/50

(21) Application number: **96200601.1**

(22) Date of filing: **05.03.1996**

(84) Designated Contracting States:
**DE DK FR GB NL SE**

(30) Priority: **08.03.1995 GB 9504630**

(71) Applicants:
- **KODAK LIMITED**
**Harrow, Middlesex HA1 4TY (GB)**
Designated Contracting States:
**GB**
- **EASTMAN KODAK COMPANY**
**Rochester, New York 14650-2201 (US)**
Designated Contracting States:
**DE DK FR NL SE**

(72) Inventors:
- **Batts, Gregory Nigel**
**Harrow, Middlesex, HA1 4TY (GB)**
- **Leeming, Karen**
**Harrow, Middlesex, HA1 4TY (GB)**
- **Moore, Christopher Peter**
**Harrow, Middlesex, HA1 4TY (GB)**

(74) Representative:
**Nunney, Ronald Frederick Adolphe et al**
**Kodak Limited**
**Patent Department**
**Headstone Drive**
**Harrow Middlesex HA1 4TY (GB)**

(54) **A material, method and apparatus for inhibiting bacterial growth in an aqueous medium**

(57) A biocidal material comprises a biocide immobilised on a support characterised in that the biocide has a log P value of at least 1.5, the support has a hydrophobic surface and the biocide is immobilised on the hydrophobic surface by a hydrophobic exclusion mechanism. The material can be used for inhibiting bacterial growth in an aqueous medium e.g. the wash water of a photoprocessing system. The material can be housed in a flow-through container.

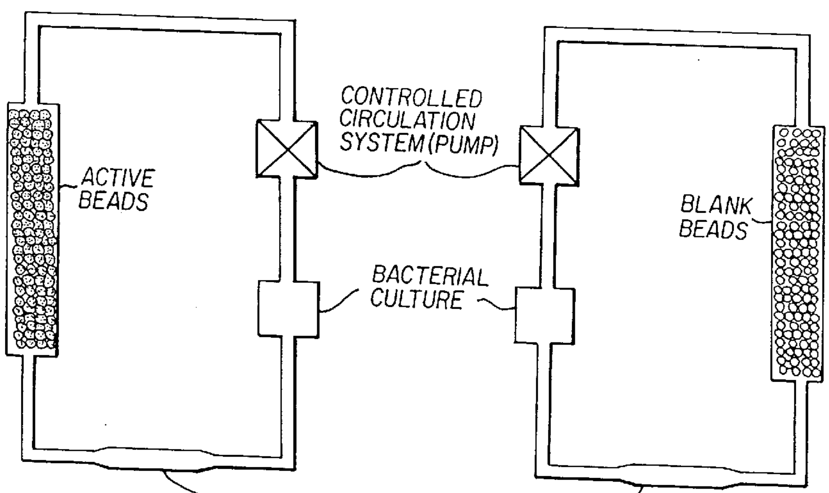


FIG. 1

EP 0 733 304 A2

## Description

### Field of the Invention

The invention relates to a material, method and apparatus for inhibiting bacterial growth in an aqueous medium.

### Background of the Invention

Bacterial growth occurs in many systems in which aqueous media such as water, aqueous solutions and aqueous dispersions are employed.

For example, significant biofouling can occur in many areas of photoprocessing systems and, in particular, where low flow rate washes and water recycling is used. The problem may be overcome by adding biocides to the wash water tanks when bacterial biofilm formation becomes evident visually. However at this point the biocides may not work and even at quite high concentrations are not particularly effective because the bacteria have attached to surfaces to form colonies which have built up in layers. Hence, any biocide in solution can only reach the outer biofilm layer and not the inner layers of the biofilm which are protected. Furthermore, widespread use of such biocides is not desirable because they are relatively expensive and toxic chemicals which require specialised disposal to protect the environment.

Alternative methods of inhibiting bacterial growth in aqueous media involve the gradual release of a biocide through interaction with water e.g. by leaching.

US-A-4 552 591 describes a biocidal composition for inhibiting microbial growth in oil field waters which comprises a biocide and a solid, particulate adsorbent therefor. The biocides are conventional water soluble compounds traditionally used in the treatment of oil field waters e.g. 2-methyl-4-isothiazolin-3-one which are adhered to a known adsorbent e.g. diatomaceous earth. The compositions avoid the personal and environmental contamination which can result from spillage of the biocide used previously in liquid form. After addition to oil field waters, such compositions release the biocide through leaching.

### Problem to be solved by the Invention

A problem associated with the prior art methods and materials for inhibiting bacterial growth in aqueous media using biocides is that biocide is released in the media.

Furthermore, there is a need for a method and materials in which the biocide is only used on demand when the bacteria are present.

Methods and materials which reduce the exposure of operators to toxic biocides are also sought.

### Summary of the Invention

The invention provides a biocidal material comprising a biocide immobilised on a support characterised in that the biocide has a log P value of at least 1.5, the support has a hydrophobic surface and the biocide is immobilised on the hydrophobic surface by hydrophobic exclusion.

The invention also provides a method for inhibiting bacterial growth in an aqueous medium comprising contacting the aqueous medium with a biocidal material comprising a biocide immobilised on a support characterised in that the biocide has a log P value of at least 1.5, the support has a hydrophobic surface and the biocide is immobilised on the hydrophobic surface by hydrophobic exclusion.

The invention also provides apparatus for inhibiting bacterial growth in an aqueous medium comprising a container having fluid inlet means and fluid outlet means said inlet and outlet means communicating with an inner chamber such that, when the apparatus is in use, fluid entering the inner chamber through the inlet means flows through the chamber and leaves the container through the outlet means characterised in that the inner chamber holds a biocidal material comprising a biocide immobilised on a support characterised in that the biocide has a log P value of at least 1.5, the support has a hydrophobic surface and the biocide is immobilised on the hydrophobic surface by hydrophobic exclusion.

### Advantageous Effect of the Invention

The invention removes the need for conventional dosing of biocides in solution, either directly or by gradual release, which has many drawbacks.

The biocide is only used on demand when the bacteria are present.

The direct exposure of operators to toxic biocides is minimised.

**Brief Description of the Drawings**

Figure 1 is a schematic representation of apparatus used in evaluating the materials of the invention.

Figure 2 is a graphical representation of results achieved using the invention in accordance with Example 1 described hereafter.

Figure 3 is a graphical representation of results achieved using the invention in accordance with Example 2 described hereafter.

Figure 4 is a schematic representation of apparatus for use in performing the method of the invention.

Figure 5 is a schematic representation of the use of the apparatus shown in Figure 4.

Figure 6 is a graphical representation of results achieved using the invention in accordance with Example 4 described hereafter.

Figure 7 is a graphical representation of results achieved using the invention in accordance with Example 4 described hereafter.

**Detailed Description of the Invention**

Biocides for use in the invention have a log P value of at least 1.5 wherein P represents the partition coefficient between n-octanol and water defined as follows

$$P = \frac{[\text{biocide}]_{\text{octanol}}}{[\text{biocide}]_{\text{water}}}$$

Log P is a well known term used in literature on biocides. As used herein, it provides a measure of the hydrophobicity of the biocide.

Biocides which may be employed in the invention include any known biocide meeting the hydrophobicity requirement or a known biocide which has been hydrophobically modified to meet the requirement.

Suitable types of biocide include those described in *"Microbiocides for the Protection of Materials", W. Paulus, published by Chapman Hall, 1993.* They are agents capable of killing or inhibiting the multiplication of microorganisms such as bacteria, yeasts, fungi, algae and lichens. Examples include heterocyclic N,S compounds, compounds with activated halogen groups and quaternary ammonium salts.

Preferred biocides include those currently employed in the treatment of photoprocessing systems e.g. isothiazolinones.

Examples of isothiazolinone biocides are those having the structure

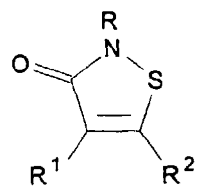

wherein

- R represents hydrogen, alkyl, aryl, alkaryl and aralkyl; and,
- $R^1$ and $R^2$ independently represent hydrogen, halogen, alkyl, or $R^1$ and $R^2$ taken together represent the atoms necessary to complete a fused carbocyclic ring, preferably a 5- or 6-membered ring e.g. a benzene ring;
- provided that R, $R^1$ and $R^2$ are chosen so that the log P value of the compound is at least 1.5.

Preferred biocides include those having the following stuctures:

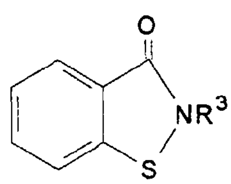

wherein $R^3$ is an alkyl group having from 4 to 20 carbon atoms or an aryl group having from 6 to 20 carbon atoms;

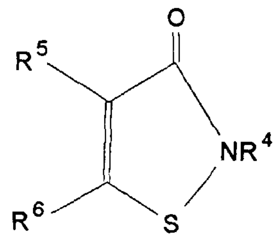

wherein $R^5$ and $R^6$ are selected from hydrogen and halogen, and $R^4$ is an alkyl group having from 5 to 20 carbon atoms; and,

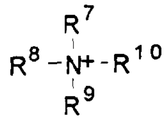

wherein each of $R^7$, $R^8$ and $R^9$ is hydrogen or an alkyl group providing a total of from 2 to 20 carbon atoms; $R^{10}$ is substituted or unsubstituted alkyl or aryl e.g. phenoxyethyl; and, Y is any suitable counter anion e.g. halide.

Specific examples of commercially available isothiazolinone biocides include
Proxel™ (manufactured by Zeneca):

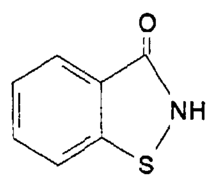

Promexal™ (manufactured by Zeneca):

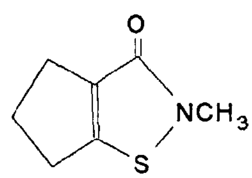

Kathon™ (manufactured by Rohm and Haas):

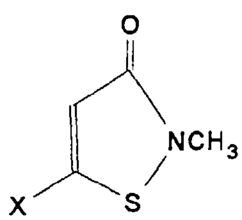

X=H, Cl

Other commercially available biocides are:
Bronopol™ (manufactured by Boots):

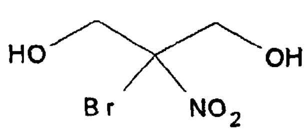

Domiphen™ bromide (manufactured by Ciba-Geigy):

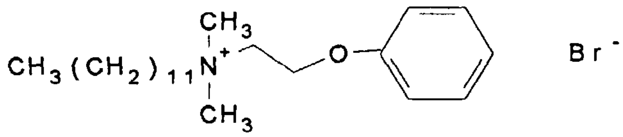

Vantocil™ (manufactured by Zeneca):

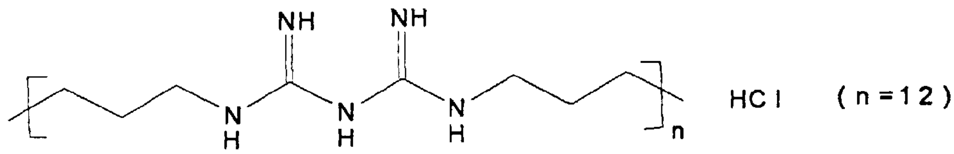

Densil S™ (manufactured by Zeneca):

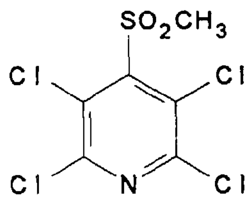

Biocides which are hydrophobically modified Proxel™ and Kathon™ have been prepared having the following structures:

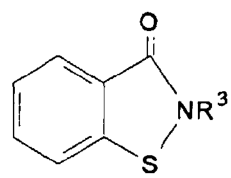

$R^3 = -(CH_2)_7CH_3$ (Compound 1)

$R^3 = -(CH_2)_{15}CH_3$ (Compound 2)

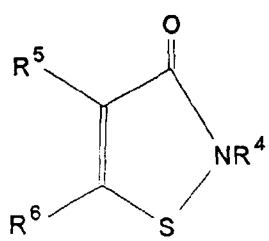

$R^4 = -(CH_2)_7CH_3$, $R^5 = H$, $R^6 = Cl$ (Compound 3)

$R^4 = -(CH_2)_{17}CH_3$, $R^5 = H$, $R^6 = Cl$ (Compound 4)

$R^4 = -(CH_2)_7CH_3$, $R^5 = H$, $R^6 = H$ (Compound 5)

$R^4 = -(CH_2)_7CH_3$, $R^5 = Cl$, $R^6 = Cl$ (Compound 6)

Many commercially available biocides are soluble in aqueous media and an increase in their hydrophobicity is required to render them suitable for use in the invention.

It is essential that biocides having a log P of at least 1.5 are used in the invention. Biocides having a log P less than 1.5 can become detached from the support and contaminate the aqueous medium. When this happens, the advantages of the invention are not realized since bacterial growth is inhibited through the release of the biocide in common with earlier known systems.

Hydrophobic polymers suitable for use as support materials include any inert, water insoluble polymers.

Examples of suitable polymers are ethenic polymers including polyolefins, polystyrene, polyvinyl chloride, polyvinyl acetate and acrylic polymers; and polymers formed by condensation reactions including polyesters, polyamides, polyurethanes, polyethers, epoxy resins, amino resins and phenol-aldehyde resins.

Specific examples of support materials are Amberlite™ XAD-4 and XAD-2 resin beads which are both highly porous, cross-linked polystyrene.

The support may take a variety of forms e.g. particulate, sheet or fibre. It may be porous or nonporous.

The biocide is immobilised on the support by a hydrophobic exclusion mechanism. Immobilisation may be carried out by addition of the dry support e.g. a resin to a solution of the biocide in an organic solvent e.g. tetrahydrofuran (THF), followed by slow addition of a similar volume of water. The support may be left in contact with the solution for a period of time e.g. 18 hours allowing most of the organic solvent to evaporate. Subsequent drying of the support leaves the biocide adsorbed thereto.

A variety of commercial and hydrophobically-modified biocides have been studied. Partition coefficients between octanol and water have been determined at 25°C by UV/visible absorption. First, the calibration curve of each biocide was determined as optical density (ODabs) versus concentration of biocide in µg/g (ppm) of water for the predominantly watersoluble materials and µg/g of octanol for the predominantly oil-soluble biocides.

A known amount of biocide was placed in a glass vessel containing either 10ml of water or 10ml of octanol depending on the solubility of the biocide. An equal volume of the other solvent was added and the glass vessel sealed. The vessel was shaken vigorously for a few minutes and then every few hours for more than 48 hours. Each mixture was placed in a sealed separating funnel and left for a further 24 hours. The water phase of each mixture was removed and the UV/visible spectra run against water with appropriate dilutions to bring absorbance between 0 and 1.5 for the commercial biocides and the octanol fractions were examined for the hydrophobically modified biocides.

The following partition coefficients shown in Table 1 were determined.

Table 1

| Biocide | P |
|---|---|
| Promexal™ | ~4.5 |
| Vantocil™ | ~0.3 |
| Domiphen™ | ~50 |
| Kathon™ | ~1 |
| Proxel™ | ~0* |
| Compound 1 | >330 |
| Compound 3 | >560 |
| Compound 2 | >130 |
| Compound 4 | >480 |

* i.e. there was almost no biocide in the oil phase.

The log P value of the biocides which are used in the invention must be at least 1.5, preferably at least 2.0.

In use, the aqueous medium is brought into contact with the biocidal material. Different ways of achieving contact include passing the aqueous medium through a container e.g. a column containing the material in particulate form, passing the aqueous medium through a filter of the material and passing the aqueous medium over the material in the form of a surface coating.

The invention is of particular use in photoprocessing systems. Such systems comprise stages for developing, fixing, bleaching and washing an exposed photographic material. Each stage requires apparatus for applying the appropriate aqueous processing solution to the photographic material. The apparatus may comprise means for supplying, removing and, possibly, recirculating such solutions.

The method of the invention may be used to inhibit bacterial growth in the wash water or other solutions used in a photoprocessor.

Figure 4 is a schematic representation of apparatus for use in performing the method of the invention. The apparatus comprises a container 10 having fluid inlet means 11 and fluid outlet means 12 said inlet and outlet means 11, 12 communicating with an inner chamber 13 of the container. When the apparatus is in use, fluid entering the inner chamber through the inlet means 11 flows through the chamber 13 and leaves the container through the outlet means 12. The inner chamber 13 holds a biocidal material in accordance with the invention in the form of polymer beads 14. A filter 15 to retain the polymer beads is positioned at the top of the inner chamber to prevent loss of the beads from

the device. The top of the container 10 is provided with plugs 16 for venting any gas which accumulates in the device.

Fluid entering the device flows down a central tube and subsequently flows up through the polymer beads. The arrows indicate the direction of the flow of fluid through the device.

Figure 5 is a schematic representation of the use of the apparatus shown in Figure 4. A tank 20 containing water 21 is shown e.g. the wash water tank of a photoprocessor. Tubing 22 has an open end in the water 21 at the bottom of tank 20, the other end being connected to the inlet of a pump 23 outside the tank 20. Tubing 24 connects the outlet of the pump 23 to the inlet of a device 25 of the type shown in Figure 4. One end of tubing 26 is connected to the outlet of device 25 and the other end opens into the top of tank 20.

In use, water is pumped from the bottom of tank 20 through device 25 and back into tank 20 in a recirculation loop. The arrows indicate the direction of the flow of water around the loop.

The invention is further illustrated by way of example as follows.

**Preparation of Biocide**

A Proxel™ analogue (Compound 2) was prepared in three steps from commercially available starting materials as outlined in Scheme 1.

**Scheme 1**

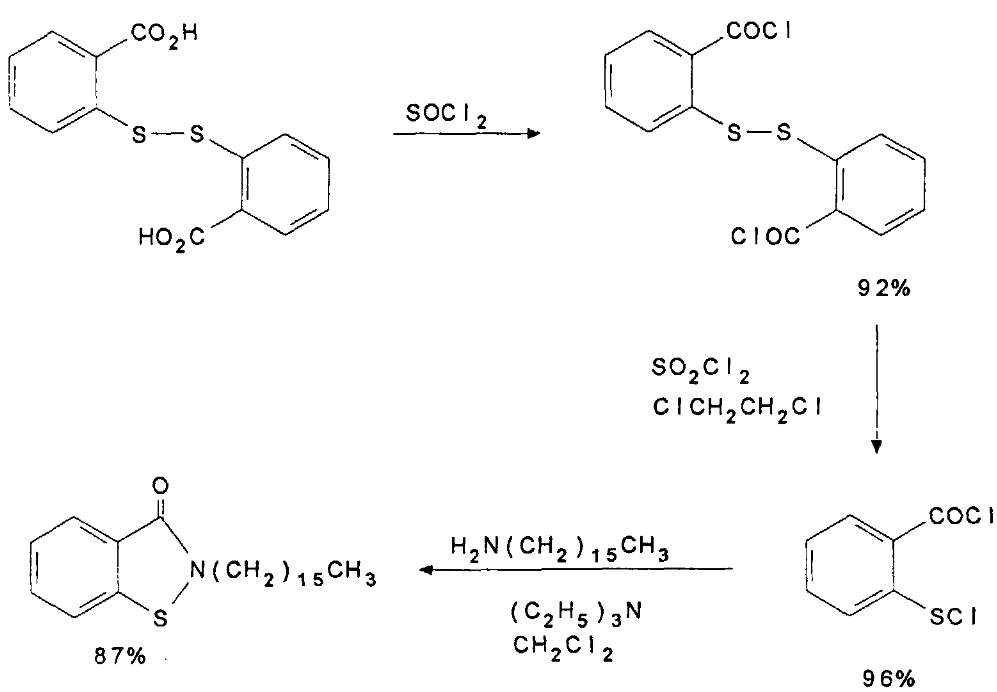


**Example 1**

A Proxel™ analogue (Compound 1) was prepared in three steps from commercially available starting materials as outlined in Scheme 1. Subsequently it was immobilised on to a commercial macroreticular polystyrene resin bead support (Amberlite™ XAD-4 or XAD-2, Rohm and Haas) by a hydrophobic exclusion mechanism, a physisorption and therefore reversible process, to give the immobilised biocide, hereinafter referred to as active beads.

Blank control (Amberlite™ XAD-4 or XAD-2) and active beads were each put separately into two 10x1cm (length x internal diameter) glass columns with screw-tight plastic adaptors; a nylon mesh filter was put at the top and bottom of each column. The columns, all silicone rubber tubing, flasks and nutrient broth necessary to complete the flow circuit were autoclaved at 120°C for >20 minutes to kill any residual bacteria. Each column was placed in circuit with 50ml of a nutrient broth as illustrated in Figure 1. A shaking water bath held at 30°C was used to keep the 250ml wide-neck round-bottomed flasks containing the culture at this constant temperature. A small inoculum aliquot of pre-prepared bacterial culture *(Pseudomonas aeruginosa)* was added to each flask to give a known concentration of colony forming units/ml in the flask.

At time zero a small aliquot of the bacterial culture was removed from each flask for further counting/analysis and

the pumps started to give a volume flow rate of 13.5ml/min; the flow direction was in this case upwards

Aliquots were removed from the flask at time intervals of 0.5, 8 and 24 hours and viable bacterial counts performed from Miles and Misra drop plates. These data are summarised in the growth curve given in Figure 2. There is the usual lag phase as the bacteria become accustomed to the new medium, followed by an exponential growth phase in each system. However, it is quite evident that the bacterial population is significantly lower in the active systems compared with the controls after 24 hours.

It is worth mentioning that differences could be seen visually between the active and control systems since solutions become more cloudy as the bacterial concentration increases due to light-scattering phenomena (above $\sim 10^6$ cfu/ml). Light scattering and UV absorption could be used to detect bacterial concentrations, but, unlike viable counts, these techniques would not distinguish between viable and non-viable organisms, giving a total bacterial count.

**Example 2**

In a separate experiment, two 10x1cm columns were filled separately with control and active beads (Amberlite™ XAD-4). The active beads had a Kathon™ analogue (Compound 3) immobilised thereon by a hydrophobic exclusion mechanism. Following a similar procedure to that outlined in Example 1, the systems were challenged with 50ml of a bacteria culture containing $\sim 10^4$ colony forming units/ml. Small aliquots were removed at the same time intervals and the number of live bacteria determined as before. It is clear the immobilised biocide is capable of significantly limiting the growth of the bacteria; the data are shown in Figure 3.

It is concluded from the microbiological data that the active beads can control the growth of bacteria in aqueous media. It is believed that the biogrowth control can be improved through optimising factors such as loading and accessibility of the biocide on the beads, flow rates, contact area: volume ratios and device design for holding the inert support.

**Example 3**

Biocide efficiency values were calculated for a number of biocides using the procedure and apparatus shown in Figure 1. The initial inoculum was prepared from an overnight culture of *Pseudomonas aeruginosa* to give a bacterial population of approximately $10^3$ bacteria per ml in the test system. The bacterial culture was maintained at 30°C on a shaking water bath and the pumps set to give a flow rate of 13.5ml/min. Initial viable counts of bacteria were performed by removing a small aliquot from each flask, serially diluting it and performing plate counts from Miles and Misra drop plates. Viable counts were performed after 24 hours. A range of column sizes, 10, 20, 30 and 40cm, were used to determine the effect of column volume on antimicrobial activity.

The biocide efficiency value (B.E.) provides a measure of antimicrobial activity within this test system. It allows the comparison of all the results obtained irrespective of the initial inoculum size or differences in the initial inoculum between the control and active system.

The B.E. value for each experiment was determined by the following equation:

$$BE_n = \frac{[\log CFU_n - \log CFU_0]_{test}}{[\log CFU_n - \log CFU_0]_{control}}$$

wherein

$BE_n$ = biocide efficiency at time n hours
$CFU_0$ = colony forming units at time 0 hours
$CFU_n$ = colony forming units at time n hours

The values obtained from this equation can be interpreted as follows:

- a negative value indicates that the test system has bactericidal action and is killing the bacteria present
- a value between 0 and 1 indicates that the test system has bacteriostatic action and is preventing the growth of the bacteria present
- a value greater than 1 indicates that the test system is having no activity/the same activity as the blank beads.

The results are displayed in Table 2 below. The biocides were immobilised on Amberlite™ XAD-4 except where shown.

Table 2

| TEST SYSTEM | COLUMN LENGTH | B.E. (t-24h) |
|---|---|---|
| Compound 1 | 10cm | 0.48 |
| Compound 1* | 10cm | 0.05 |
| Compound 1* | 10cm | 0.50 |
| Compound 2 | 10cm | 1.02 |
| Compound 2 | 10cm | 0.82 |
| Compound 2 | 10cm | 0.91 |
| Compound 2 | 10cm | 0.68 |
| Compound 2* | 10cm | 0.84 |
| Compound 2 | 20cm | 0.99 |
| Compound 2 | 20cm | 0.64 |
| Compound 2 | 20cm | 0.75 |
| Compound 2 | 30cm | 0.64 |
| Compound 2 | 30cm | 0.86 |
| Compound 2 | 40cm | 0.90 |
| Compound 3 | 10cm | -0.60 |
| Compound 3 | 10cm | -0.69 |
| Compound 3 | 10cm | -0.39 |
| Compound 4 | 10cm | 0.70 |
| Compound 4 | 10cm | 0.82 |
| Compound 4 | 10cm | 0.73 |
| Compound 4* | 10cm | 0.99 |
| Compound 4* | 10cm | 0.98 |
| Compound 5 | 10cm | 0.80 |
| Compound 5 | 10cm | 0.60 |
| Compound 6 | 10cm | 0.77 |
| Compound 6 | 10cm | 0.62 |
| Densil S ™ | 10cm | 0.98 |
| Densil S ™ | 10cm | 0.40 |
| Domiphen ™ | 10cm | -0.49 |
| Domiphen ™ | 10cm | -0.46 |
| Domiphen ™ | 10cm | -1.92 |
| Bronopol ™ | 10cm | -0.80 |
| Promexal ™ | 10cm | -6.30 |
| Promexal ™ | 10cm | -4.48 |
| Vantocil ™ | 10cm | -1.09 |
| Vantocil ™ | 10cm | -1.22 |

*Biocide immobilised on Amberlite™ XAD-2.

**Example 4**

A biocide mixture (190g; Compound 5, 24 wt.%, Compound 3, 66wt.% and Compound 6, 9 wt.%) was divided into two equal portions and dissolved in tetrahydrofuran (THF) (2x1.0L) in two 5L beakers. Amberlite™ XAD-4 resin beads (2x400g) were added to each beaker with agitation provided by an overhead stirrer. Water (2x1.0L) was added dropwise whilst maintaining stirring at 400-500 rpm. On completion of the addition the stirring rate was lowered to 300-400 rpm and maintained for about 20 hours. The resin was collected by filtration, washed with water (0.5L) and transferred to a vacuum oven where it was dried at about 80°C for 4 hours. The immobilised biocide was obtained as beige beads (0.978Kg), corresponding to a biocide loading of 19.4%. The presence of biocide was confirmed by IR, MS and elemental analysis.

A 1L Cuno filter housing was filled with about 600g of the immobilised biocide resin beads to provide a device of the type shown in Figure 4. The resin beads were poured into the housing before assembly and a gap was left to allow for any resin swell. A circular filter was placed inside the top of the housing to prevent loss of the beads from the device. The housing was made water-tight by use of an O-ring seal with the rim pushing the circular filter against the top of the housing.

The device was used to inhibit bacterial growth in the wash water of the wash tank of a photoprocessing machine. The machine was a Kodamatic™ 710 Graphics processor comprising a developer tank, fixer tank and a single wash tank having a capacity of 22L.

Under normal operating conditions, Algigon, a broad spectrum quaternary ammonium biocide formulation (supplied by Arnold Cook Ltd.) is used in the wash tank to control biogrowth. It is dosed in at a level of approximately 1ml per litre of wash water. For the trial of the device in accordance with the invention, the Algigon dosing pump was disconnected so that no solution biocide could enter the wash tank.

Before making the modifications required to use the invention, the wash tank was drained and all racks and rollers removed and scrubbed clean to remove any deposits. The tank walls were also scrubbed clean and the tank was filled with 5% bleach for 20 minutes. The bleach was drained and the tank was rinsed thoroughly with water.

Modifications were made to allow wash water to be drawn from the tank, passed through the device of the invention and returned to the tank. This involved providing tubing, a pump and the device arranged as illustrated in Figure 5.

The wash tank was filled with water. Using the pump, the water was recirculated through the device for a period of four weeks at a flow rate of about 4L/min.

A similar device containing only blank Amberlite™ XAD-4 resin beads i.e. no biocide, was tested in the same way as the device of the invention. This control experiment was run for a period of two weeks during which time biogrowth occurred in the wash tank.

The microbiological evaluation of the device of the invention was divided into three parts:

1. Initial monitoring of the wash tank under normal operating conditions, i.e. when Algigon was being used as the biocide.
2. With the device of the invention attached to the wash tank and no solution biocide being added.
3. With blank Amberlite™ XAD-4 resin in the device attached to the wash tank and no solution biocide being added.

Samples were taken from the tank three times a day, at 8.00 am (before the machine was run), 11.30 am (during operation of the processor) and at 4.00 pm, to determine the effect of processing on the microbial population.

A sample was aseptically removed from the tank and viable counts were obtained by performing a serial dilution series. Duplicate spread plates were performed for each dilution and the neat sample to obtain, after incubation of the plates, a countable number of colonies.

Two different types of nutrient media were used for the evaluation to allow for the enumeration of different types of microorganisms. R2A is a low nutrient media specifically for the isolation and enumeration of water borne bacteria. YMA selects for yeast and fungal isolates and also acid-tolerant bacteria.

Figure 6 shows the viable counts obtained on R2A plates from the second week of the trial of the device of the invention and compares them to those obtained in the presence of Algigon and also when blank Amberlite™ XAD-4 was placed in the filter housing. The device of the invention is controlling the bacterial population to a greater extent than the solution biocide, Algigon. It can also be seen from this graph that Algigon is having very little effect on the bacterial population as the counts obtained with blank resin and when Algigon is used are very similar.

Figure 7 compares the counts obtained on YMA plates. Once again, the device of the invention is having a greater effect on this population of microorganisms than the solution biocide Algigon.

Representative water samples were taken from the recirculation loop at the end of the four week trial of the device of the invention and were submitted for HPLC, MS and UV analysis; no evidence of any solution biocide or obvious metabolite was found. This confirms that the biocide is held on the resin and is only supplied on-demand to the microorganisms.

It can be seen from the data generated that the device of the invention was effective in controlling biogrowth in the wash tank for at least four weeks. The performance of the device of the invention exceeded that of the solution biocide used previously. Furthermore it has been shown that the biocide is not released into solution, but it is taken up directly by the microorganisms. This has clear economic and environmental advantages over current biogrowth control strategies as less biocide is used, more effectively, without release to drain.

## Claims

1. A biocidal material comprising a biocide immobilised on a support characterised in that the biocide has a log P value of at least 1.5, the support has a hydrophobic surface and the biocide is immobilised on the hydrophobic surface by hydrophobic exclusion.

2. A material according to claim 1 wherein the biocide has the structure

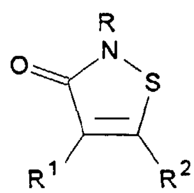

wherein

R represents hydrogen, alkyl, aryl, alkaryl and aralkyl; and,
$R^1$ and $R^2$ independently represent hydrogen, halogen, alkyl, or $R^1$ and $R^2$ taken together represent the atoms necessary to complete a fused carbocyclic ring.

3. A material according to claim 1 wherein the biocide has the structure

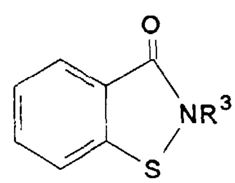

wherein $R^3$ is an alkyl group having from 4 to 20 carbon atoms or an aryl group having from 6 to 20 carbon atoms.

4. A material according to claim 1 wherein the biocide has the structure

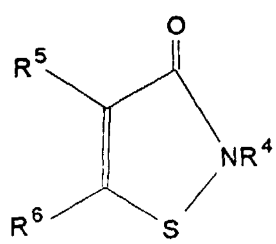

wherein

$R^4$ is an alkyl group having from 5 to 20 carbon atoms; and,
$R^5$ and $R^6$ are selected from hydrogen and halogen.

5. A material according to claim 1 wherein the biocide has the structure

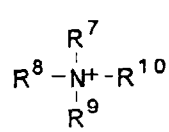

wherein

each of $R^7$, $R^8$ and $R^9$ is hydrogen or an alkyl group providing a total of from 2 to 20 carbon atoms;
$R^{10}$ is a substituted or unsubstituted alkyl or aryl group; and,
Y is a counter anion.

**6.** A material according to any one of the preceding claims wherein the biocide has a log P value of at least 2.

**7.** A material according to any one of the preceding claims wherein the support is a hydrophobic polymer.

**8.** A material according to claim 7 wherein the support is in the form of polymer beads.

**9.** A method for inhibiting bacterial growth in an aqueous medium comprising contacting the aqueous medium with a biocidal material according to any one of the preceding claims.

**10.** A method according to claim 9 wherein the aqueous medium is the wash water of a photoprocessing system.

**11.** Apparatus for inhibiting bacterial growth in an aqueous medium comprising a container having fluid inlet means and fluid outlet means said inlet and outlet means communicating with an inner chamber such that, when the apparatus is in use, fluid entering the inner chamber through the inlet means flows through the chamber and leaves the container through the outlet means characterised in that the inner chamber holds a biocidal material according to any one of claims 1 to 8.

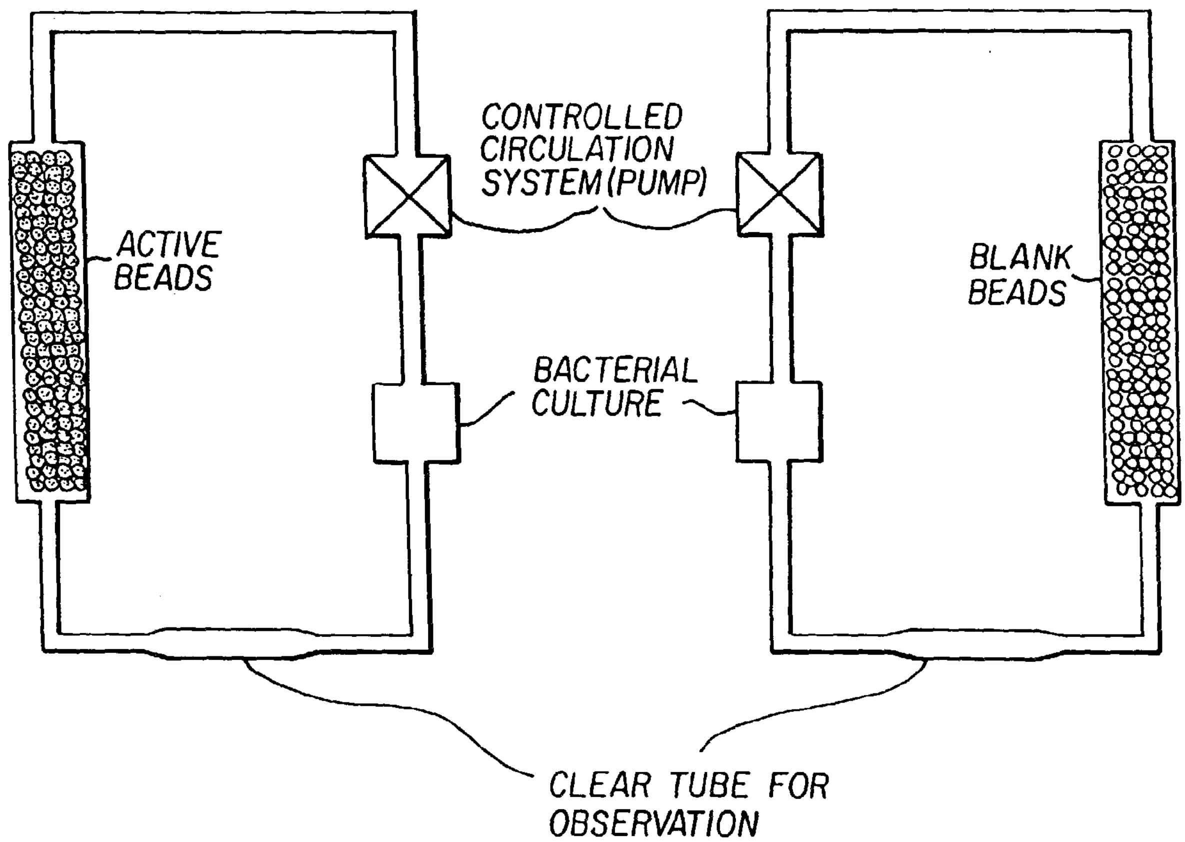
CONTROLLED
CIRCULATION
SYSTEM (PUMP)
ACTIVE
BEADS
BLANK
BEADS
BACTERIAL
CULTURE
CLEAR TUBE FOR
OBSERVATION

FIG. 1

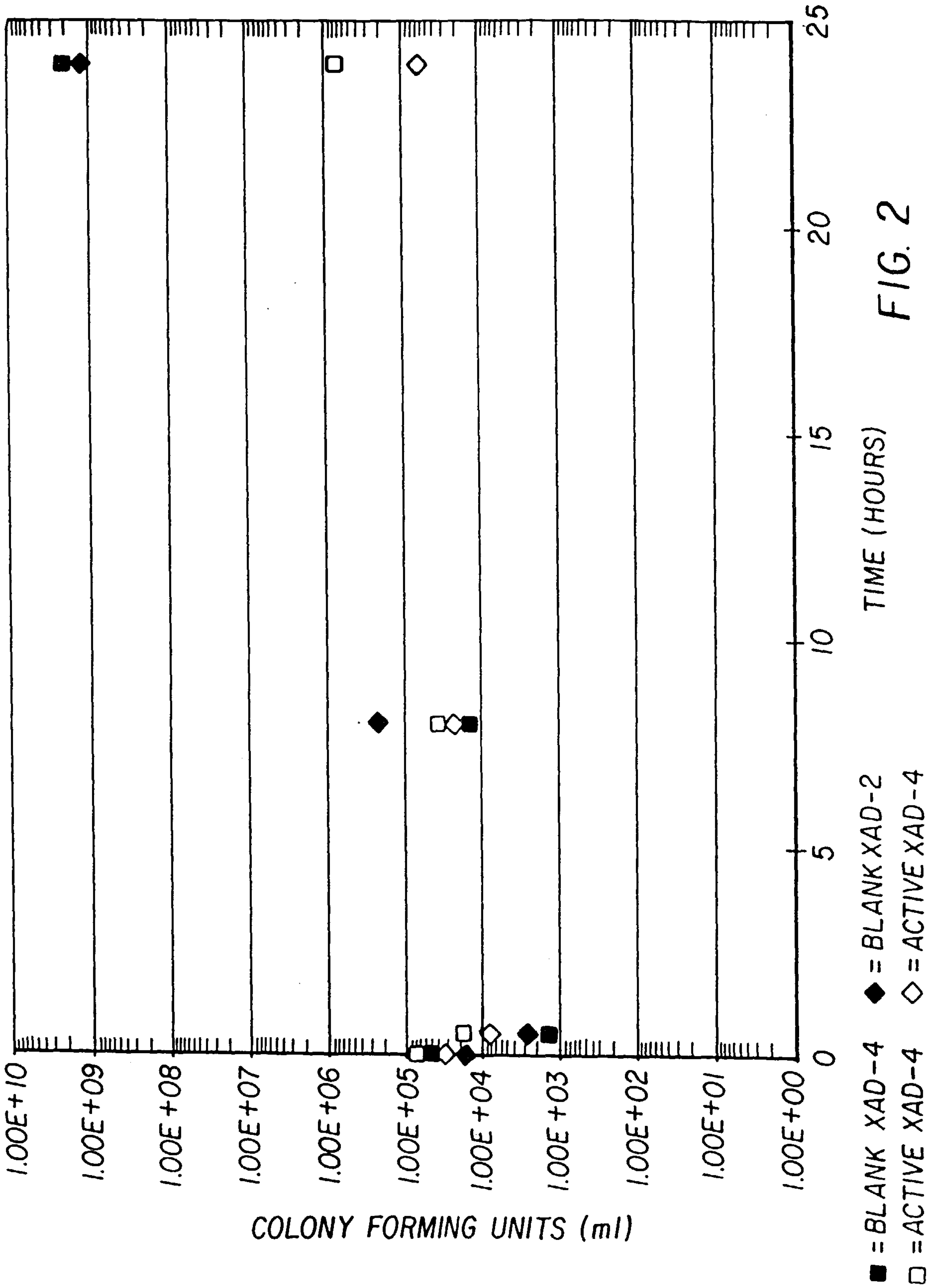
1.00E+10
1.00E+09
1.00E+08
1.00E+07
1.00E+06
1.00E+05
1.00E+04
1.00E+03
1.00E+02
1.00E+01
1.00E+00
COLONY FORMING UNITS (ml)
0
5
10
15
20
25
TIME (HOURS)
■ = BLANK XAD-4
◆ = BLANK XAD-2
□ = ACTIVE XAD-4
◇ = ACTIVE XAD-4

FIG. 2

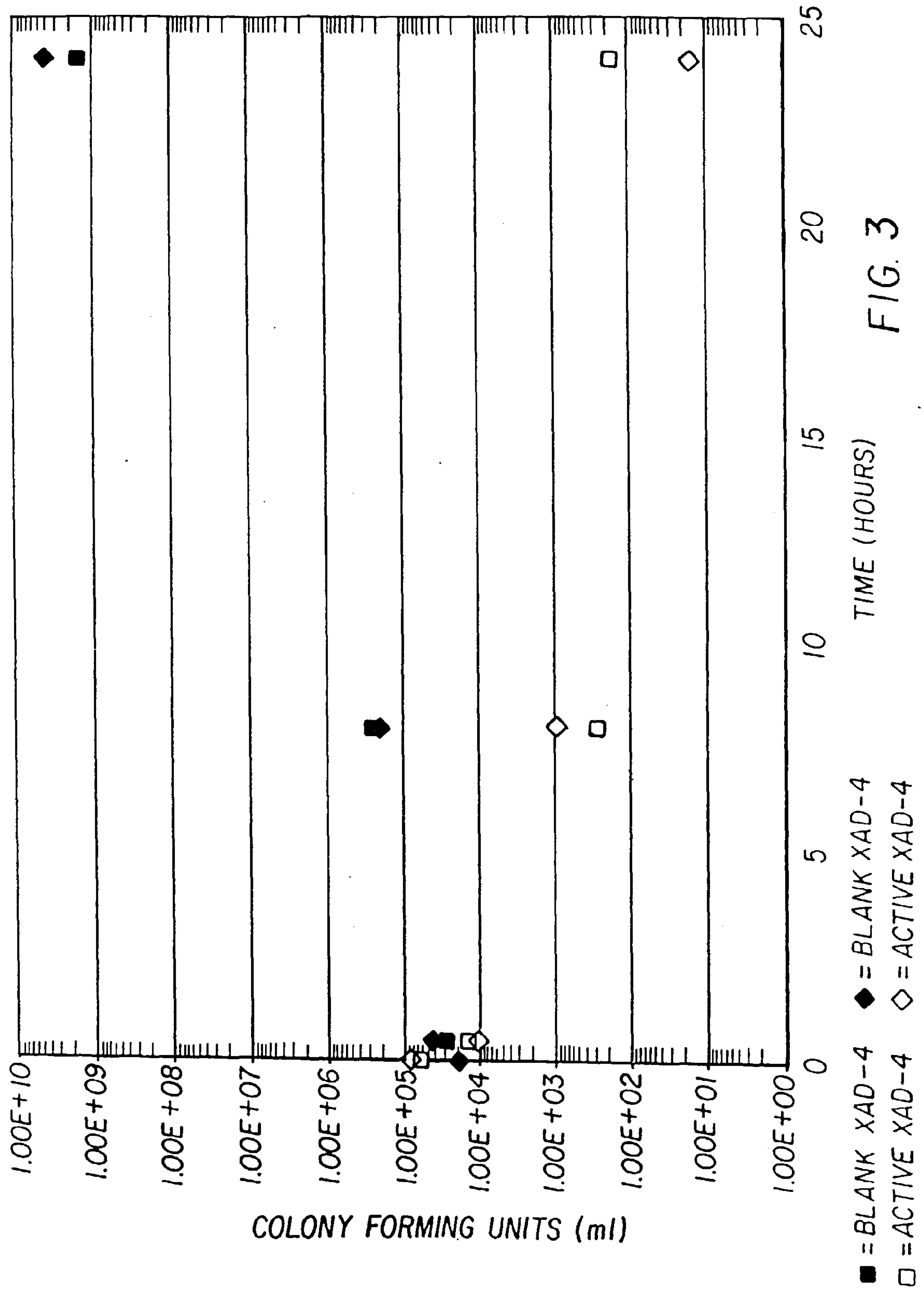
COLONY FORMING UNITS (ml)
1.00E+10
1.00E+09
1.00E+08
1.00E+07
1.00E+06
1.00E+05
1.00E+04
1.00E+03
1.00E+02
1.00E+01
1.00E+00
TIME (HOURS)
0
5
10
15
20
25
■ = BLANK XAD-4
◆ = BLANK XAD-4
□ = ACTIVE XAD-4
◇ = ACTIVE XAD-4

FIG. 3

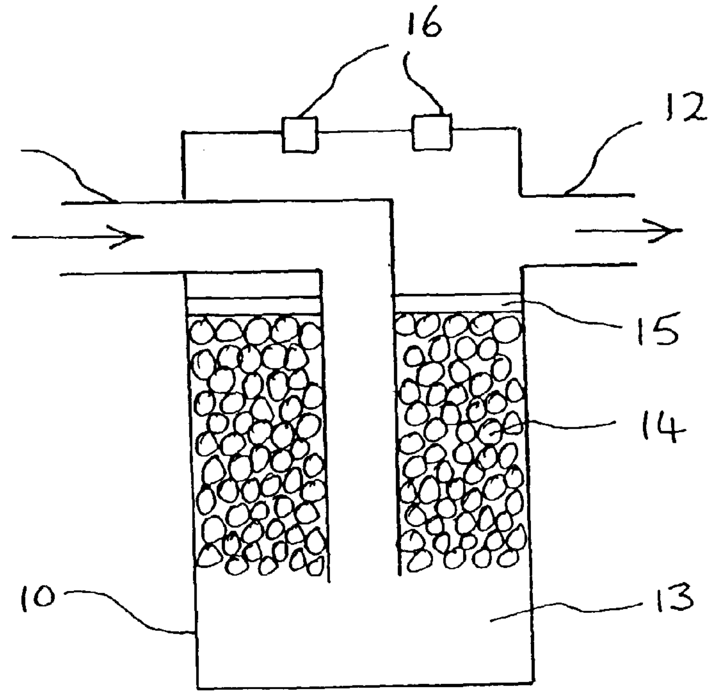


FIG. 4

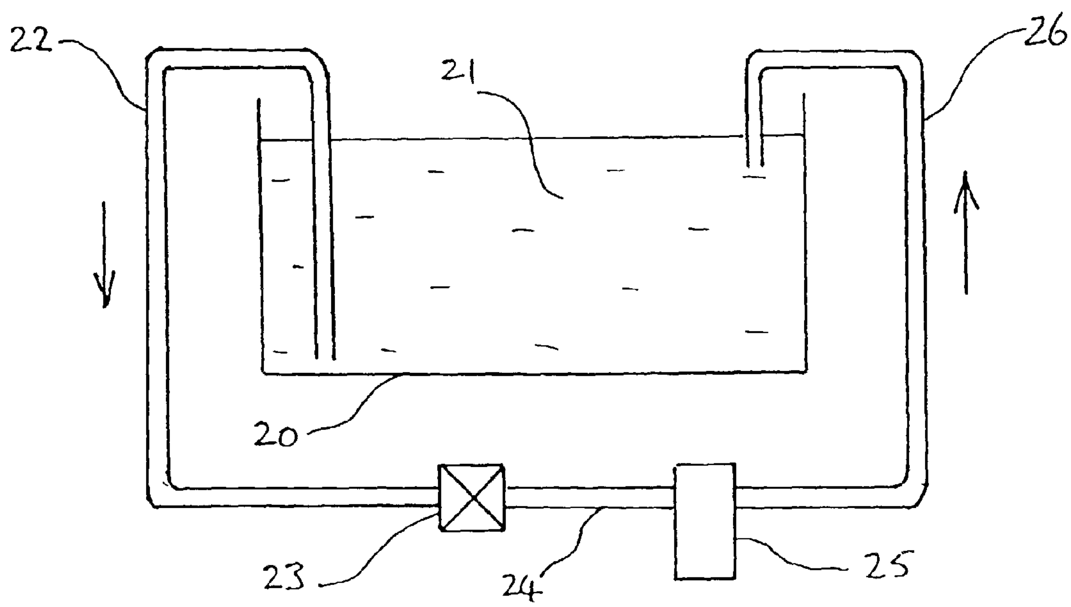


FIG. 5

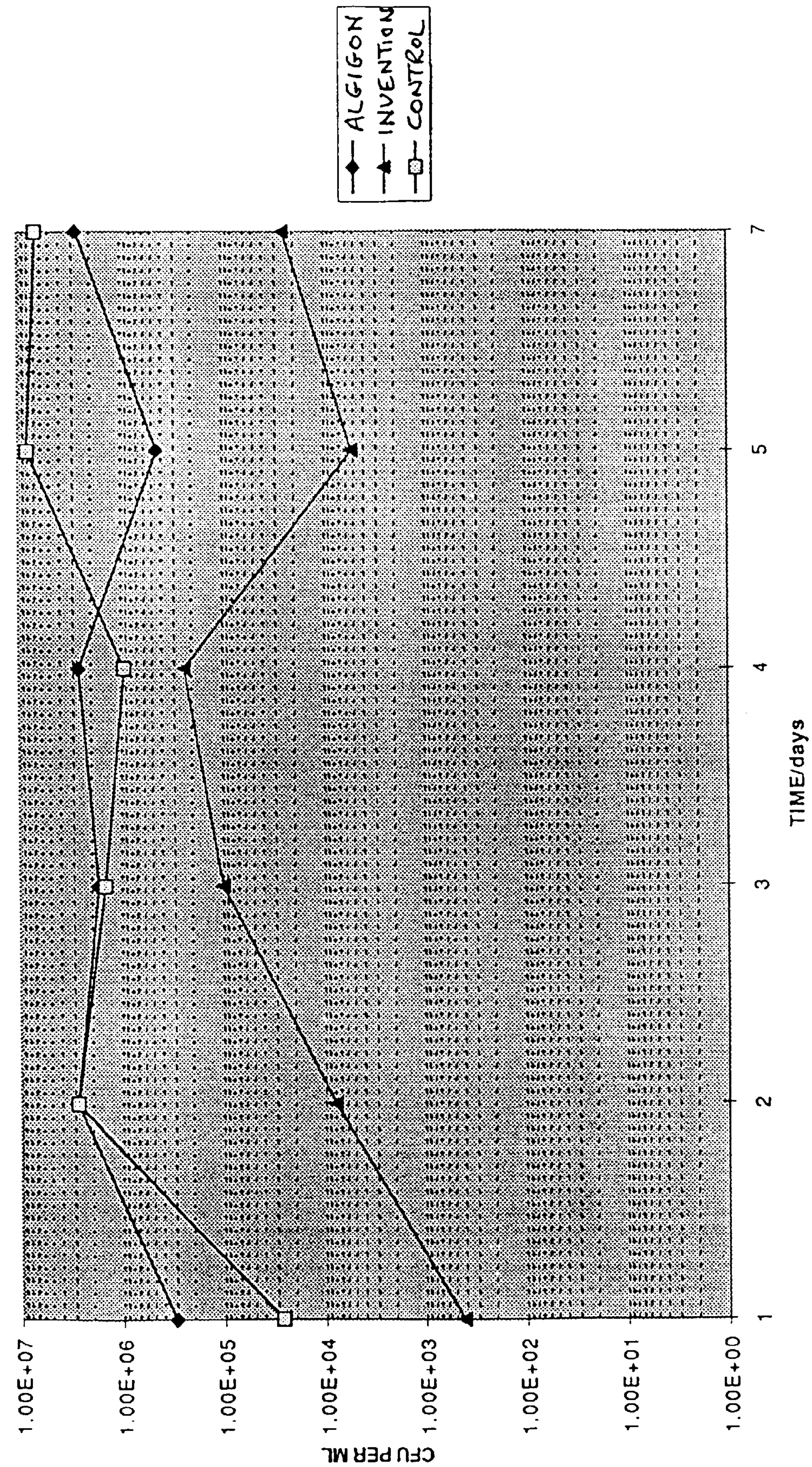
ALGIGON
INVENTION
CONTROL
CFU PER ML
1.00E+07
1.00E+06
1.00E+05
1.00E+04
1.00E+03
1.00E+02
1.00E+01
1.00E+00
TIME/days
1
2
3
4
5
7

FIG. 6

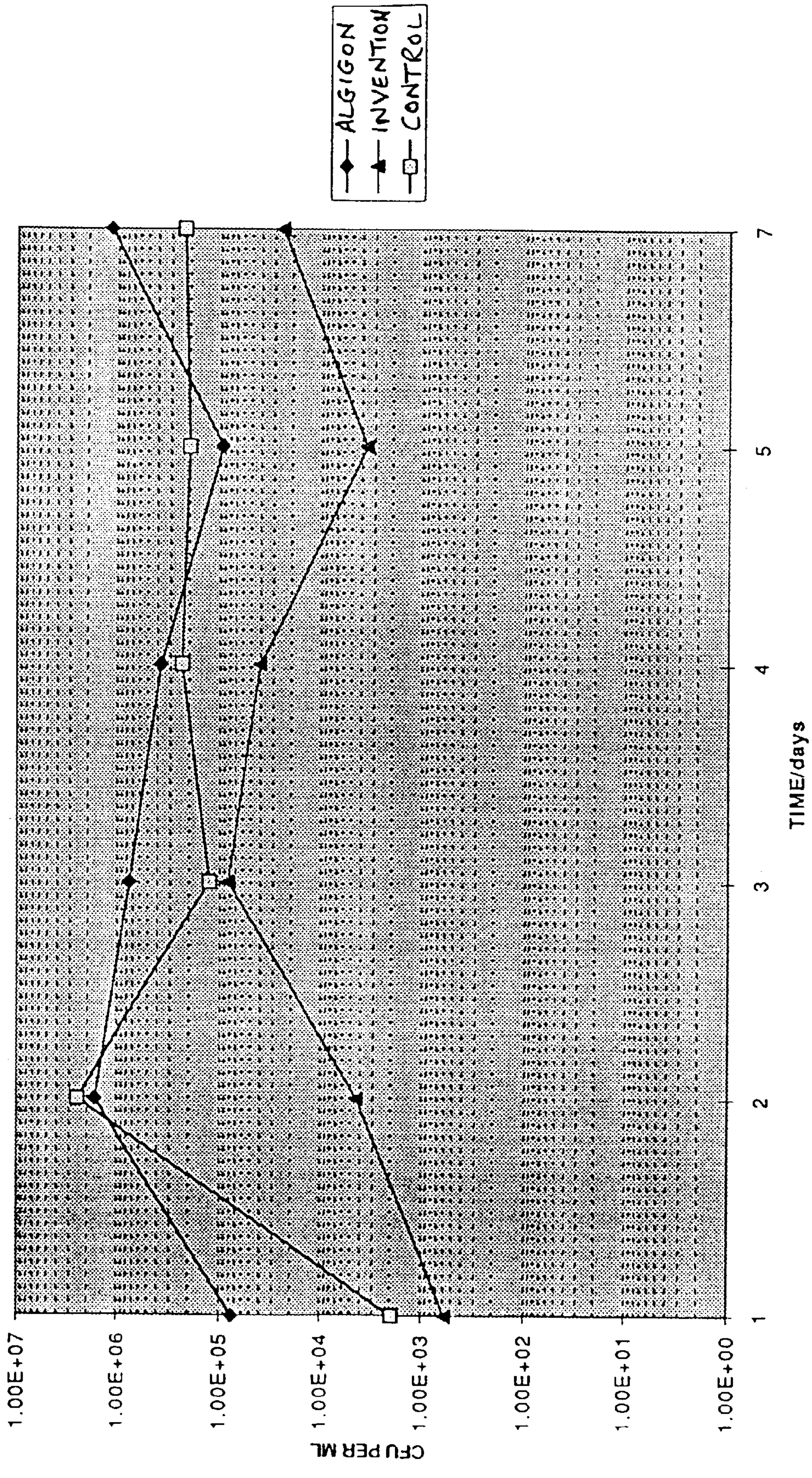
ALGIGON
INVENTION
CONTROL
CFU PER ML
1.00E+07
1.00E+06
1.00E+05
1.00E+04
1.00E+03
1.00E+02
1.00E+01
1.00E+00
TIME/days
1
2
3
4
5
7

FIG. 7